# EUROPÄISCHE PATENTSCHRIFT

(11) **EP 1 728 653 B1**
(45) Veröffentlichungstag und Bekanntmachung des Hinweises auf die Patenterteilung: **15.04.2009**
(21) Anmeldenummer: 06005229.7
(22) Anmeldetag: 15.03.2006
(51) Int. Cl.: B62D 17/00, B60G 7/00

(54) **Regelbares Aufhängungssystem**
Adjustable suspension system
Système de suspension réglable

(30) Priorität: 30.05.2005 DE 102005025039
(43) Veröffentlichungstag der Anmeldung: 06.12.2006
(73) Patentinhaber: Benteler Automobiltechnik GmbH, 33104 Paderborn (DE)
(72) Erfinder: Marxkors, Andreas, 33161 Hövelhof (DE)
(74) Vertreter: Griepenstroh, Jörg

(56) Entgegenhaltungen:
- EP-A- 1 118 850
- EP-A- 1 275 534
- DE-A1- 1 455 650
- DE-A1- 3 744 069
- DE-A1- 3 928 135
- DE-C- 876 211
- JP-A- 58 191 614
- US-A- 4 752 079
- US-A1- 2006 138 740
- US-B1- 6 173 977

## Beschreibung

Die Erfindung betrifft eine Radaufhängung, die mindestens eine lösbar an einem Lenker befestigte Radlagereinheit aufweist, welche einen Achszapfen umfasst. Eine solche Radaufhängung ist aus DE-A-1 455 650 bekannt.

Im Bereich der Radaufhängungen vollziehen sich erhebliche technologische Veränderungen, die geprägt sind vom Kundenwunsch nach mehr Komfort, das heißt niedrigerem Abrollgeräusch und geringerer Schwingungsbelastung, höherer Fahrsicherheit und längerer Lebensdauer sowie durch das Bestreben, Gewicht einzusparen.

Eine Radaufhängung verbindet die Räder mit der Karosserie eines Fahrzeugs. Ihre Aufgabe ist es unter anderem, die Räder zu führen. Die Stellung der Räder wird durch die Raumkoordinaten und die Größen Spur und Sturz sowie die Elastizitäten sämtlicher Bauteile beschrieben.

Radaufhängungen an Hinterachsen von Personenkraftwagen sind häufig als Verbundlenkerachse ausgeführt. Diese werden als Schweißbaugruppen hergestellt. An der Schnittstelle zur Radlagereinheit müssen Verbundlenkerachsen spanabhebend bearbeitet werden. Durch die spanabhebende Bearbeitung wird eine Spur-/Sturz-Voreinstellung erreicht.

Die spanabhebende Bearbeitung der Schnittstelle ist jedoch mit hohem Aufwand verbunden, da die Bearbeitung beidseitig erfolgen muss. Anschließend ist eine aufwendige Säuberung von Spänen und gegebenenfalls Kühlschmiermitteln erforderlich. Trennfugen im Bereich der Schnittstelle verursachen zusätzlichen Arbeitsaufwand und führen zu einer verschlechterten Korrosionsbeständigkeit, da geringfügige Spalte nicht vermieden werden können und eine Lackierung der Schnittstelle aus produktionstechnischen Gründen nicht durchführbar ist.

Der Erfindung liegt die Aufgabe zugrunde, eine Radaufhängung derart zu verbessern, dass eine spanabhebende Bearbeitung an der Schnittstelle zwischen Lenker und Radlagereinheit entfallen kann, wodurch Arbeitsaufwand eingespart und die Korrosionsbeständigkeit des Lenkers erhöht werden soll.

Diese Aufgabe wird mit den im Patentanspruch 1 angegebenen Merkmalen gelöst.

Kerngedanke der Erfindung ist, an einem Lenker der Radaufhängung eine Trägerplatte zur Befestigung der Radlagereinheit vorzusehen. Der Achszapfen der Radlagereinheit weist zudem einen Anlagekopf auf, welcher unter dem Einfluss einer Druckplatte in der Aufnahme der Trägerplatte gelenkig abgestützt ist.

Durch die gelenkige Abstützung ist die Radlagereinheit an der Trägerplatte bzw. am Lenker kardanisch gelagert. Mithin ist eine Einstellung der Spur- und Sturzwerte möglich. Die Einstellung der Spur- und Sturzwerte kann manuell durch geeignete Vorrichtungen erfolgen. Vertikal- und Horizontalkräfte, die im Bereich der Radaufhängung auftreten, sind ebenfalls durch die Lagerung übertragbar.

Es ist vorstellbar, dass die Einstellung der Sturz- und Spurwerte im Fahrbetrieb erfolgen kann. Die würde dann durch einen entsprechenden Regler in Verbindung mit Sensoren und Aktuatoren gewährleistet.

Vorteilhafte Ausführungsformen und Weiterbildungen des Erfindungsgedankens ergeben sich aus den abhängigen Ansprüchen 2 bis 11.

Der Anlagekopf des Achszapfens kann eine kugelabschnittsförmig gestaltete Anlagefläche aufweisen. Durch die kugelabschnittsförmige Gestaltung wird eine in drei Achsen drehbewegliche Lagerung gewährleistet.

Vorteilhaft ist es ferner, wenn die Trägerplatte eine konkave Aufnahme aufweist. Eine derartige Trägerplatte kann besonders einfach durch Prägung hergestellt werden. Sie kann in der Mitte eine kreisrunde Öffnung aufweisen. Durch die Öffnung, die vorzugsweise kreisrund ausgeführt ist, kann Material eingespart und die Fertigung erleichtert werden.

Der Anlagekopf kann zudem eine Druckschulter aufweisen, auf welche die Druckplatte wirkt. Die Druckschulter ist zweckmäßigerweise als Absatz am Achszapfen ausgeführt. Die Druckplatte kann über Schraubverbindungen mit der Trägerplatte Klemmdruck erzeugend gekoppelt sein. Schraubverbindungen erleichtern die Montage der Radaufhängung. Über die Schraubverbindungen ist zudem eine Einstellung der Spur- und Sturzwerte möglich.

Die Schraubverbindungen können Kugelmuttern und Kugelscheiben aufweisen, welche auf der dem Achszapfen gegenüber liegenden Seite der Trägerplatte angeordnet sind. Durch die Verwendung von Kugelmuttern und Kugelscheiben ist sichergestellt, dass die Schraubverbindung immer eine sichere, da vollflächige, Auflage an der Trägerplatte hat. Dies ist insbesondere bei großen Sturz- oder Spurwinkeln von Vorteil.

Die Druckplatte und die Trägerplatte können wenigstens über drei Schraubverbindungen gekoppelt sein. Somit ist gewährleistet, dass die Spur-und Sturzwerte einstellbar sind. Zweckmäßigerweise kommen jedoch vier Schraubverbindungen zur Kopplung der Druckplatte und der Trägerplatte zum Einsatz. Dies ermöglicht eine besonders einfache Einstellung der Sturz- und Spurwerte, da zur Einstellung dieser Werte die Schraubverbindungen in horizontaler oder vertikaler Richtung der Trägerplatte lediglich jeweils wechselseitig angezogen und gelöst werden müssen.

Zur Einstellung der Spur- und Sturzwerte kann der Radlagereinheit ferner ein Stellmotor zugeordnet sein. Dieser Stellmotor kann elektrisch, pneumatisch oder hydraulisch betrieben werden. Zweckmäßigerweise ist der Stellmotor mit den Schraubverbindungen gekoppelt. Die Kopplung kann derart erfolgen, dass über den Stellmotor gegenüber liegende Schraubverbindungen wechselseitig anziehbar und lösbar sind. Die Kugelmuttern der Schraubverbindungen können dazu durch Zahnräder mit einem Innengewinde und einem Kugelsitz ersetzt werden. Über einen Flachantrieb können diese mit der Antriebswelle des Stellmotors zusammenwirken.

Die Erfindung ist nachfolgend anhand von in Zeichnungen dargestellten Ausführungsbeispielen näher erläutert. Es zeigen:
- Figur 1: eine Radaufhängung im Querschnitt;
- Figur 2: eine Radaufhängung mit einem Stellmotor im Querschnitt;
- Figur 3: einen Druckplatte in der Draufsicht und
- Figur 4: einen Querschnitt durch den Druckplatte in Figur 3 entlang der Linie IV-IV.

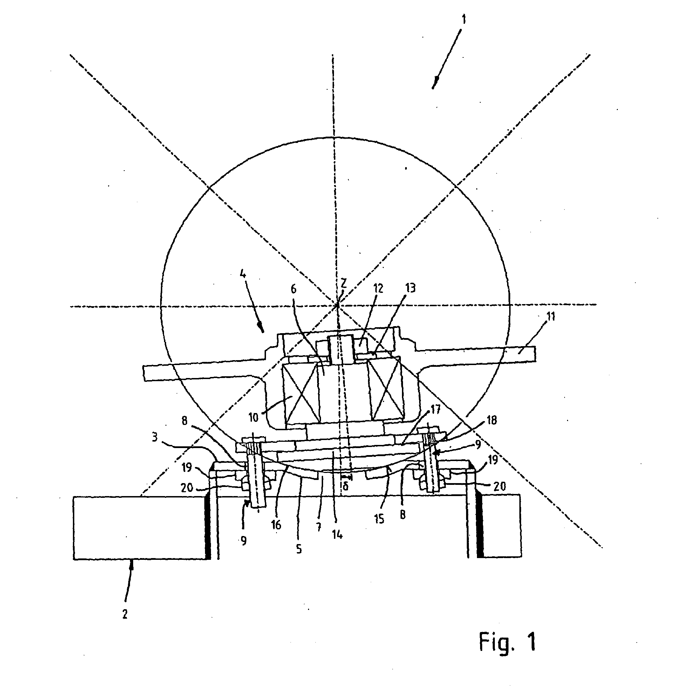

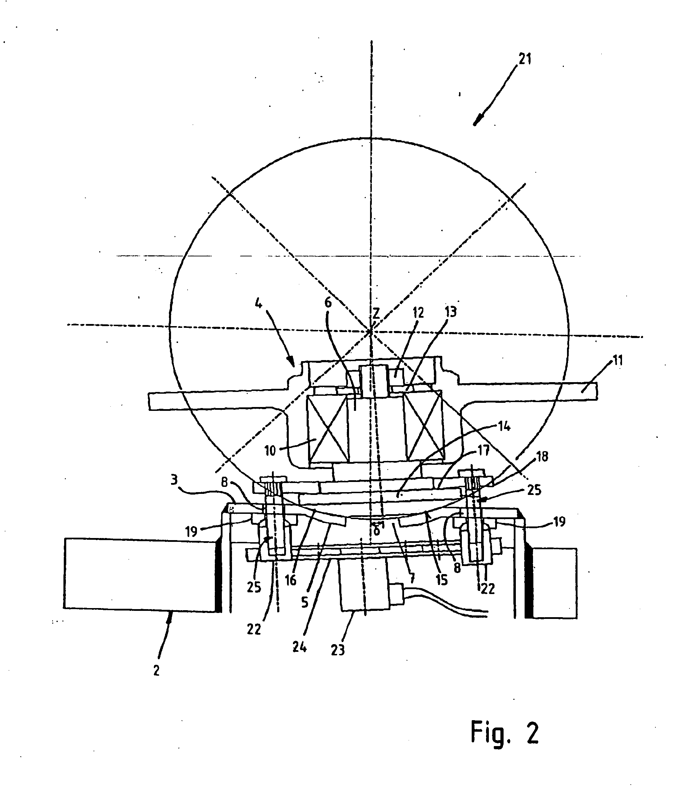

In den Figuren 1 und 2 ist ein Ausschnitt einer Radaufhängung 1; 21 dargestellt. Die Radaufhängung 1; 21 umfasst einen Lenker 2, an den eine Trägerplatte 3 zur Befestigung einer Radlagereinheit 4 angeschweißt ist. Der Lenker 2 kann ein Querlenker oder Längslenker sein.

Die Trägerplatte 3 weist mittig eine konkave Aufnahme 5 für einen Achszapfen 6 der Radlagereinheit 4 auf. Die Aufnahme 5 hat eine zentrische Bohrung 7 zur Materialersparnis und zur Fertigungserleichterung. Die Trägerplatte 3 weist ferner vier Flanschbohrungen 8 auf, durch die Schraubverbindungen 9; 25 zur Befestigung der Radlagereinheit 4 gesteckt sind.

Die Radlagereinheit 4 umfasst einen Achszapfen 6, auf den ein Kugellager 10 aufgesteckt ist, welches wiederum eine Radnabe 11 trägt. Das Kugellager 10 ist durch eine außenseitig angeordnete Achszapfenmutter 12 in Verbindung mit einer Scheibe 13, die auf einem Innenring des Kugellagers 10 aufliegt, auf dem Achszapfen 6 befestigt. Der Achszapfen 6 weist einen Anlagekopf 14 auf, dessen kugelabschnittsförmig gestaltete Anlagefläche 15 sich an der Trägerplatte 3 abstützt. Zwischen Achszapfen 6 und Trägerplatte 3 befindet sich eine Trennschicht 16, die eine Reduzierung der Reibung bewirkt, wodurch das Verschwenken der Radlagereinheit 4 erleichtert wird. Die Trennschicht 16 kann aus Teflon gefertigt oder eine Fettschicht bzw. ein Ölfilm sein. Die Anlagefläche 15 ist endseitig des Achszapfens 6 abgeflacht. Auf der der Anlagefläche 15 abgewandten Seite des Anlagekopfs 6 ist ein Absatz als Druckschulter 17 vorgesehen. Eine Druckplatte 18 ist auf den Achszapfen 6 geschoben und wirkt über die Druckschulter 17 auf den Anlagekopf 14 ein.

Vier Schraubverbindungen 9; 25 koppeln die Druckplatte 18 und die Trägerplatte 3, wodurch Klemmdruck erzeugbar ist, der eine exakte Positionierung des Anlagekopfes in der Trägerplatte und die gewünschte Ausrichtung der Radlagereinheit 4 in Bezug auf die Sturz-/Spur-Einstellung gewährleistet. Die Schraubverbindungen 9; 25 weisen auf der dem Achszapfen 6 abgewandten Seite der Trägerplatte 3 auf der Trägerplatte 3 abgestützte Kugelscheiben 19 und Kugelmuttern 20 auf. Durch Anziehen und Lösen der Schraubverbindungen 9; 25 kann die Radlagereinheit 4 um ein Zentrum Z verschwenkt werden, das außerhalb des Achszapfens 6 auf der dem Anlagekopf 14 gegenüber liegenden Endseite des Achszapfens 6 gelegen ist.

Durch die Verwendung einer Trägerplatte 3 kann auf die aufwendige spanabhebende Bearbeitung des Lenkers 2 an der Schnittstelle zur Radlagereinheit 4 eingespart werden. Zudem wird durch die erfindungsgemäße Lösung die Einstellung der Sturz- und Spurwerte ermöglicht. In den Figuren 1 und 2 ist dies durch den Spurwinkel δ dargestellt. Die Einstellung kann nach Bedarf geändert werden. Dazu sind lediglich die Kugelmuttern 20 der Schraubverbindungen 9; 25 entsprechend anzuziehen bzw. zu lösen.

Die Radaufhängung 21 der Figur 2 weist abweichend von Figur 1 statt der Kugelmuttern 20 Kugelsitzgewindezahnräder 22 auf, die mit einem Stellmotor 23 über einen Flachantrieb 24 gekoppelt sind. Über den Stellmotor 23, den Flachantrieb 24 und die Kugelsitzgewindezahnräder 22 sind die Schraubverbindungen 25 anziehbar und lösbar. Es ist vorgesehen, dass diese Einstellung auch während der Fahrt erfolgen kann. Der Stellmotor 23 ist elektrisch betrieben.

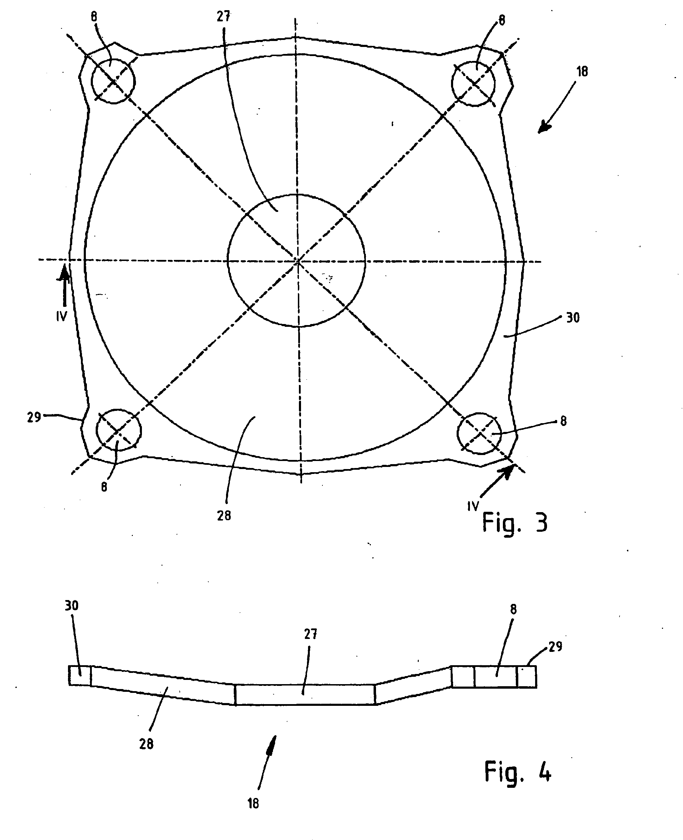

In Figur 3 ist eine Druckplatte 18 dargestellt. Die Druckplatte 18 weist ein Kernloch 27, einen das Kernloch 27 umgebenden Kegelbereich 28 und außen einen Anschraubflansch 29 auf. Der Anschraubflansch 29 weist vier symmetrisch zueinander angeordnete Flanschbohrungen 8 für Schraubenverbindungen 9; 25 auf. Der Rand 30 der Druckplatte 18 ist im Bereich der Flanschbohrungen 8 radial nach außen verstärkt.

In Figur 4 ist erkennbar, dass die Druckplatte 18 im Wesentlichen flach ist. Lediglich der Kegelbereich 28 weist eine konische Verjüngung zur Mitte hin auf. Im Bereich des Kernlochs 27 ist die Druckplatte 18 gegenüber dem Rand 30 leicht vertieft. In der Bildebene rechts ist ein Teil des Anschraubflansches 29 dargestellt. Der Rand 30 ist in diesem Bereich radial nach außen verstärkt und weist eine Flanschbohrung 8 auf.

### Bezugszeichen:

- 1-: Radaufhängung
- 2-: Lenker
- 3-: Trägerplatte
- 4-: Radlagereinheit
- 5-: Aufnahme
- 6-: Achszapfen
- 7-: Bohrung
- 8-: Flanschbohrung
- 9-: Schraubverbindung
- 10-: Kugellager
- 11-: Radnabe
- 12-: Achszapfenmutter
- 13-: Scheibe
- 14-: Anlagekopf
- 15-: Anlagefläche
- 16-: Trennschicht
- 17-: Druckschulter
- 18-: Druckplatte
- 19-: Kugelscheibe
- 20-: Kugelmutter
- 21-: Radaufhängung
- 22-: Kugelsitzgewindezahnrad
- 23-: Stellmotor
- 24-: Flachantrieb
- 25-: Schraubverbindung
- 27-: Kernloch
- 28-: Kegelbereich
- 29-: Anschraubflansch
- 30-: Rand

- Z-: Zentrum
- δ-: Spurwinkel

## Patentansprüche

1. Radaufhängung, die mindestens eine lösbar an einem Lenker (2) befestigte Radlagereinheit (4) aufweist, welche einen Achszapfen (6) umfasst, **dadurch gekennzeichnet, dass** an dem Lenker (2) eine Trägerplatte (3) zur Befestigung der Radlagereinheit (4) vorgesehen ist und der Achszapfen (6) einen Anlagekopf (14) aufweist, welcher unter dem Einfluss einer Druckplatte (18) in einer Aufnahme (5) der Trägerplatte (3) gelenkig abgestützt ist.

2. Radaufhängung nach Anspruch 1, **dadurch gekennzeichnet, dass** der Anlagekopf (14) eine kugelabschnittsförmig gestaltete Anlagefläche (15) aufweist.

3. Radaufhängung nach Anspruch 1 oder 2, **dadurch gekennzeichnet, dass** die Trägerplatte (3) eine konkave Aufnahme (5) aufweist.

4. Radaufhängung nach einem der Ansprüche 1 bis 3, **dadurch gekennzeichnet, dass** der Anlagekopf (14) eine Druckschulter (17) aufweist, auf welche die Druckplatte (18) einwirkt.

5. Radaufhängung nach einem der Ansprüche 1 bis 4, **dadurch gekennzeichnet, dass** die Druckplatte (18) mit der Trägerplatte (3) über Schraubverbindungen (9; 25) Klemmdruck erzeugend gekoppelt ist.

6. Radaufhängung nach Anspruch 5, **dadurch gekennzeichnet, dass** die Schraubverbindungen (9) Kugelsitzmuttern (20) und Kugelscheiben (19) aufweisen, welche auf der dem Achszapfen (6) gegenüber liegenden Seite der Trägerplatte (3) angeordnet sind.

7. Radaufhängung nach einem der Ansprüche 5 oder 6, **dadurch gekennzeichnet, dass** wenigstens drei Schraubverbindungen (9; 25) die Druckplatte (18) und die Trägerplatte (3) koppeln.

8. Radaufhängung nach einem der Ansprüche 5 bis 7, **dadurch gekennzeichnet, dass** vier Schraubverbindungen (9; 25) die Druckplatte (18) und die Trägerplatte (3) koppeln.

9. Radaufhängung nach einem der Ansprüche 1 bis 8, **dadurch gekennzeichnet, dass** der Radlagereinheit (4) ein Stellmotor (23) zur Einstellung der Spur-/Sturzwerte zugeordnet ist.

10. Radaufhängung nach Anspruch 9, **dadurch gekennzeichnet, dass** der Stellmotor (23) mit den Schraubverbindungen (25) gekoppelt ist.

11. Radaufhängung nach einem der Ansprüche 9 oder 10, **dadurch gekennzeichnet, dass** über den Stellmotor (23) gegenüberliegende Schraubverbindungen (25) wechselseitig anziehbar und lösbar sind.

## Claims

1. Wheel suspension which has at least one wheel bearing unit (4) which is detachably fastened to a link (2) and which comprises an axle journal (6), **characterized in that** a support plate (3) for fastening the wheel bearing unit (4) is provided on the link (2) and the axle journal (6) has a contact head (14) which is articulatedly supported under the influence of a pressure plate (18) in a receptacle (5) of the support plate (3).

2. Wheel suspension according to Claim 1, **characterized in that** the contact head (14) has a contact surface (15) which is formed in the shape of a spherical section.

3. Wheel suspension according to Claim 1 or 2, **characterized in that** the support plate (3) has a concave receptacle (5).

4. Wheel suspension according to one of Claims 1 to 3, **characterized in that** the contact head (14) has a pressure shoulder (17) on which the pressure plate (18) acts.

5. Wheel suspension according to one of Claims 1 to 4, **characterized in that** the pressure plate (18) is coupled to the support plate (3) by means of screw connections (9; 25) so as to generate a clamping pressure.

6. Wheel suspension according to Claim 5, **characterized in that** the screw connections (9) have spherical-seat nuts (20) and spherical discs (19) which are arranged on the opposite side of the support plate (3) from the axle journal (6).

7. Wheel suspension according to one of Claims 5 or 6, **characterized in that** at least three screw connections (9; 25) couple the pressure plate (18) and the support plate (3).

8. Wheel suspension according to one of Claims 5 to 7, **characterized in that** four screw connections (9; 25) couple the pressure plate (18) and the support plate (3).

9. Wheel suspension according to one of Claims 1 to 8, **characterized in that** the wheel bearing unit (4) is assigned an actuating motor (23) for adjusting the toe/camber values.

10. Wheel suspension according to Claim 9, **characterized in that** the actuating motor (23) is coupled to the screw connections (25).

11. Wheel suspension according to one of Claims 9 or 10, **characterized in that** opposite screw connections (25) can be reciprocally tightened and loosened by means of the actuating motor (23).

## Revendications

1. Suspension qui comprend au moins une unité de roulement de roue (4) fixée de manière amovible à une bielle (2), laquelle unité comporte un tourillon (6), **caractérisée en ce qu'**une plaque de support (3) destinée à fixer l'unité de roulement de roue (4) est prévue sur la bielle (2) et le tourillon (6) comprend une tête d'appui (14), laquelle s'appuie de manière articulée sous l'influence d'une plaque de pression (18) dans un logement (5) de la plaque de support (3).

2. Suspension selon la revendication 1, **caractérisée en ce que** la tête d'appui (14) comprend une surface d'appui (15) conçue en forme de section sphérique.

3. Suspension selon la revendication 1 ou 2, **caractérisée en ce que** la plaque de support (3) comprend un logement concave (5).

4. Suspension selon l'une quelconque des revendications 1 à 3, **caractérisée en ce que** la tête d'appui (14) comprend un cône d'attaque (17) sur lequel agit la plaque de pression (18).

5. Suspension selon l'une quelconque des revendications 1 à 4, **caractérisée en ce que** la plaque de pression (18) est couplée à la plaque de support (3) par des raccords à vis (9 ; 25) en produisant une pression de serrage.

6. Suspension selon la revendication 5, **caractérisée en ce que** les raccords à vis (9) comprennent des écrous d'appui sphériques (20) et des disques sphériques (19), lesquels sont disposés sur la face de la plaque de support (3) opposée au tourillon (6).

7. Suspension selon la revendication 5 ou 6, **caractérisée en ce qu'**au moins trois raccords à vis (9 ; 25) couplent la plaque de pression (18) et la plaque de support (3).

8. Suspension selon l'une quelconque des revendications 5 à 7, **caractérisée en ce que** quatre raccords à vis (9 ; 25) couplent la plaque de pression (18) et la plaque de support (3).

9. Suspension selon l'une quelconque des revendications 1 à 8, **caractérisée en ce qu'**à l'unité de roulement de roue (4) est associé un servomoteur (23) destiné à régler les valeurs de connexion/de déconnexion.

10. Suspension selon la revendication 9, **caractérisée en ce que** le servomoteur (23) est couplé par les raccords à vis (25).

11. Suspension selon la revendication 9 ou 10, **caractérisée en ce que** des raccords à vis (25) opposés l'un à l'autre par le servomoteur (23) peuvent être mutuellement serrés et desserrés.
